# EUROPÄISCHE PATENTANMELDUNG

(11) **EP 2 081 045 A2**
(43) Veröffentlichungstag der Anmeldung: **22.07.2009**
(21) Anmeldenummer: 08021584.1
(22) Anmeldetag: 12.12.2008
(51) Int. Cl.: G01S 5/02, G01S 13/87

(54) **Funknetzwerksystem und Verfahren zur Bestimmung einer unbekannten Position einer Sende-Empfangs-Einheit eines Funknetzwerkes**

(30) Priorität: 18.01.2008 DE 102008005212
(71) Anmelder: ATMEL Germany GmbH, 74072 Heilbronn (DE)
(72) Erfinder: Poegel, Frank, Dr.-Ing., 01309 Dresden (DE); Dietzsch, Peter, 01217 Dresden (DE); Häntzschel, Dirk, Dipl. - Ing, 01833 Dürrröhrsdorf-Dittersbach (DE)
(74) Vertreter: Müller, Wolf-Christian

(57) **Zusammenfassung**

Verfahren zur Bestimmung einer unbekannten Position einer Sende-Empfangs-Einheit einer Anzahl von Sende-Empfangs-Einheiten eines Funknetzwerkes, Verwendung einer Signalqualität und Funknetzwerk
- bei dem eine Signalfeldstärke und/oder eine Laufzeit eines über eine Antenne empfangenen Signals gemessen wird,
- bei dem eine Signalqualität des über die Antenne empfangenen Signals bestimmt wird,
- bei dem die gemessene Signalfeldstärke und/oder die Laufzeit anhand der bestimmten Signalqualität gewichtet wird,
- bei dem die unbekannte Position der Sende-Empfangs-Einheit der Sende-Empfangs-Einheiten aus mehreren gewichteten Signalfeldstärken und/oder Laufzeiten und bekannten Positionen der Sende-Empfangs-Einheiten berechnet wird.

## Beschreibung

Die vorliegende Erfindung betrifft ein Funknetzwerksystem und ein Verfahren zur Bestimmung einer unbekannten Position einer Sende-Empfangs-Einheit eines Funknetzwerkes sowie die Verwendung einer Signalqualität.

Aus der Diplomarbeit "Positionsbestimmung in drahtlosen Ad-hoc-Sensor-Netzwerken", Frank Reichenbach, 31.03.2004, sind mehrere Algorithmen zur Bestimmung einer unbekannten Position eines Knotens in einem SensorNetzwerk bekannt. Dabei wird die Signalernpfangsstärke aktueller Übertragungstechniken analysiert, indem lediglich die Messung der Signalempfangsstärke in Form von RSSI-Werten untersucht wird. Die RSSI-Werte sind mit den drei verschiedenen Übertragungstechniken - ZigBee (IEEE 802.15.4), WLAN (IEEE 802.11) und Bluetooth (IEEE 802.15.1) - gemessen. Bei ZigBee wird die RSSI-Ausgangsspannung eingelesen und in eine approximierte Signalempfangsstärke in der Einheit dBm konvertiert. Bluetooth besitzt neben RSSI-Messungen zusätzlich die Messung einer Link-Quality. Die Link-Quality ist ein Maß für die Zuverlässigkeit einer bereits geöffneten Verbindung von zwei Knoten. Weder die Signalstärke noch Link-Quality geben dabei Aufschluss über eine Entfernungsabhängigkeit.

Der Erfindung liegt die Aufgabe zugrunde, ein möglichst verbessertes Verfahren zur Bestimmung einer unbekannten Position einer Sende-Empfangs-Einheit eines Funknetzwerkes anzugeben. Diese Aufgabe wird durch ein Verfahren mit den Merkmalen des unabhängigen Anspruchs 1 gelöst. Vorteilhafte Weiterbildungen sind Gegenstand von abhängigen Ansprüchen und in der Beschreibung enthalten.

Demzufolge ist eine Anzahl von Sende-Empfangs-Einheiten eines Funknetzwerkes vorgesehen, wobei eine Position einer Sende-Empfangs-Einheit dieser Anzahl unbekannt ist und bestimmt werden soll. Jede Sende-Empfangs-Einheit ist dabei zum Senden und Empfangen eines Signals per Funk über eine Luftschnittstelle ausgebildet. In dem Verfahren wird eine Signalfeldstärke am Empfänger und/oder eine Laufzeit eines über eine Antenne empfangenen Signals gemessen. Die Messung kann dabei beispielsweise durch Umsetzen von einer zur Signalfeldstärke korrespondierenden analogen Spannung in einen digitalen Bitwert erfolgen. Die Laufzeit wird vorzugsweise mittels Spreizsequenzen ermittelt. Zu Messung der Laufzeit wird das ausgesendete Signal am Empfänger beispielsweise durch Korrelation erkannt. Hierzu erfolgt vorzugsweise eine Suche der Zeitstelle der besten Übereinstimmung - insbesondere ein Peak der Korrelationsfunktion - des Empfangssignals mit erwarteten Sequenzen oder Symbolen. für die Laufzeitmessung ist es notwendig, dass Sender und Empfänger in einer Art synchronisiert sind, also gleiche Zeitbasen aufweisen, um die Zeitdifferenz zwischen Aussenden und Empfangen zu berechnen.

Weiterhin wird in dem Verfahren eine Signalqualität des über die Antenne empfangenen Signals bestimmt. Die Qualität des Signals wird vorzugsweise aus dem mittleren Korrelationswert mehrerer Symbole des Signals abgeleitet. Wenn die Empfangsleistung kleiner als eine Empfängerempfindlichkeit ist, kann die Qualität von der Signalfeldstärke abhängen.

Vorzugsweise wird die Signalqualität aus einem Verhältnis von übertragenen Datenrahmen oder Datenpaketen mit Fehlern in der Übertragung zu einer Gesamtzahl von übertragenen Datenrahmen oder Datenpaketen bestimmt.

Zusätzlich können die Anzahl fehlerhafter Symbole in jedem Datenrahmen oder Datenpaket zur Bestimmung der Signalqualität ausgewertet werden.

Weiterhin wird die gemessene Signalfeldstärke und/oder die Laufzeit anhand der bestimmten Signalqualität gewichtet. Unter einer Gewichtung wird dabei verstanden, dass die Signalfeldstärke und/oder die Laufzeit und die der Signalfeldstärke und/oder der Laufzeit zugeordnete Signalqualität in der folgenden Berechnung zusammen ausgewertet werden. Dabei gibt die Signalqualität die Zuverlässigkeit und Fehlerwahrscheinlichkeit der gemessenen Signalfeldstärke anhand verwendeter Modelle an. Bevorzugt ist dabei vorgesehen, dass die Signalqualität aus demselben Signalumfang ermittelt wird, wie auch die Signalfeldstärke und/oder die Laufzeit ermittelt wird, so dass die Signalfeldstärke und/oder die Laufzeit und die jeweilige Signalqualität einander fest zugeordnet sind. Vorzugsweise werden sowohl die Signalfeldstärke und/oder die Laufzeit als auch die Signalqualität bei zumindest einem selben Datenrahmen oder Datenpaket ermittelt. Diese Messung kann vorteilhafterweise mit mehreren Datenrahmen wiederholt werden um beispielsweise zeitvariante Messfehler zu reduzieren.

Weiterhin wird in dem Verfahren die ungekannte Position der Sende-Empfangs-Einheit aus mehreren gewichteten Signalfeldstärken und bekannten Positionen anderer Sende-Empfangs-Einheiten der Anzahl berechnet. Dabei ist es nicht erforderlich, dass alle Positionen der anderen Sende-Empfangs-Einheiten bekannt sind.

Ein weiterer Aspekt der Erfindung ist ein Funknetzwerksystem mit einer Anzahl von Sende-Empfangs-Einheiten. Jede Sende-Empfangs-Einheit des Funknetzwerksystems weist Messmittel auf, die zur Messung einer Signalfeldstärke und/oder einer Laufzeit eines über eine Antenne empfangenen Signals eingerichtet sind. Weiterhin sind die Messmittel zur Bestimmung einer Signalqualität des über die Antenne empfangenen Signals eingerichtet. Vorzugsweise kann in einem Spreiz-Spektrum-System die Signalqualität durch Korrelation des demodulierten Empfangssignals mit bekannten bzw. erwarteten Sequenzen ermittelt werden. Hierzu ist vorzugsweise ein Detektor vorgesehen. Der Detektor kann vorteilhafterweise in Doppelfunktion zur Detektion der Daten eingerichtet sein.

Das Funknetzwerksystem weist Berechnungsmittel auf, die zur Berechnung einer unbekannten Position einer Sende-Empfangs-Einheit eingerichtet sind. Die Berechnungsmittel können dabei beispielsweise im Inneren der Empfangseinheit mit der unbekannten Position ausgebildet sein. Alternativ sind die Berechnungsmittel in einem Zentralrechner des Funknetzwerksystems ausgebildet, der zur Berechnung einer Vielzahl von unbekannten Positionen von Sende-Empfangs-Einheiten innerhalb des Funknetzwerksystems ausgebildet ist. Hierzu werden mehrere gemessene Signalfeldstärken und/oder Laufzeiten und Signalqualitäten, die von einer jeweiligen Sende-Empfangs-Einheit bestimmt wurden, zum Zentralrechner als Daten übertragen.

Die unbekannte Position der Sende-Empfangs-Einheit wird aus gemessenen Signalfeldstärken und/oder Laufzeiten von empfangenen Signalen und bekannten Positionen der Sende-Empfangs-Einheiten berechnet.

Die Berechnungsmittel sind zur Gewichtung der gemessenen Signalfeldstärke und/oder der Laufzeit anhand der bestimmten Signalqualität eingerichtet. Die Gewichtung bildet dabei einen funktionalen Zusammenhang, wobei eine gemessene Signalfeldstärke und/oder die gemessene Laufzeit mit einer zugeordneten höheren Signalqualität eine höhere Gewichtung erhält, als eine gemessene Signalfeldstärke und/oder die gemessene Laufzeit mit einer niedrigeren Signalqualität. Die Gewichtung kann beispielsweise durch einen Faktor im Bereich von 0 bis 1 ausgedrückt werden.

Ein weiterer Aspekt der Erfindung ist eine Verwendung einer Signalqualität zur Gewichtung einer gemessenen Signalfeldstärke und/oder einer gemessenen Laufzeit. Eine derartige Verwendung ist in Anspruch 9 angegeben, vorteilhafte Weiterbildungen sind Gegenstand von abhängigen Ansprüchen und in der Beschreibung enthalten.

Demzufolge wird eine Signalqualität aus einem übertragenen Datenrahmen bestimmt. Ein derartiger Datenrahmen ist beispielsweise eine bestimmte oder variable Abfolge von Bitwerten, die mittels einer Modulation als Signal übertragen werden. Die Signalqualität wird zur Gewichtung einer gemessenen Signalfeldstärke und/oder einer Laufzeit verwendet, wobei die Signalfeldstärke und/oder die Laufzeit von einem über eine Antenne empfangenen Signal gemessen wird.

Eine unbekannte Position einer Sende-Empfangs-Einheit des Funknetzwerkes mit einer Anzahl von Sende-Empfangs-Einheiten wird aus mehreren gewichteten Signalfeldstärken mehrerer empfangener Signale und bekannter Positionen der Sende-Empfangs-Einheiten berechnet.

Die im Folgenden beschriebenen Weiterbildungen beziehen sich sowohl auf das Verfahren zur Bestimmung einer unbekannten Position, als auch auf das Funknetzwerksystem mit der Anzahl von Sende-Empfangs-Einheiten als auch auf die Verwendung einer Signalqualität zur Gewichtung einer gemessenen Signalfeldstärke und/oder einer gemessenen Laufzeit.

Gemäß einer bevorzugten Weiterbildungsvariante ist vorgesehen, dass ein Wertebereich der Signalqualität einem Gewichtungsfaktor zugeordnet wird. Wird beispielsweise die Signalqualität zwischen 0% und 100% angegeben, so kann für den Wertebereich von 0% bis 25% der Gewichtungsfaktor 0,25, für den Bereich 26% bis 50% der Gewichtungsfaktor 0,5, für den Bereich 51% bis 75% der Gewichtungsfaktor 0,75 und für den Bereich von 76% bis 100% der Gewichtungsfaktor 1 zugeordnet werden. Alternativ ist es möglich, den Wertebereich zwischen 0% und 50% dem Gewichtungsfaktor 0 und dem Wertebereich zwischen 50% und 100% dem Gewichtungsfaktor 1 zuzuordnen.

Ebenfalls ist es möglich, den Wertebereich und/oder den Gewichtungsfaktor während des Verfahrens zu verändern. Ebenfalls ist es möglich, dass der Gewichtungsfaktor anhand einer vorgegebenen Funktion aus Werten innerhalb des Wertebereichs berechnet wird. Bevorzugt wird der Gewichtungsfaktor über eine vorgegebene Funktion von der Signalqualität abgebildet. In einer besonders vorteilhaften Weiterbildungsvariante ist vorgesehen, dass zwei Wertebereiche der Signalqualität durch eine Schwelle unterschieden werden. Die Schwelle kann dabei beispielsweise ein Schwellwert sein, der im Sinne einer Komparator-Funktion die Signalqualität mit dem Schwellwert vergleicht. Alternativ kann die Schwelle auch veränderbar, beispielsweise anhand der Anzahl der Messergebnisse, sein. Alternativ zu einer Schwelle ist auch eine Fuzzy-Logic verwendbar.

In einer besonders vorteilhaften Ausgestaltung wird einem ersten Wertebereich der zwei Wertebereiche der Gewichtungsfaktor 0 und einem zweiten Wertebereich der zwei Wertebereiche der Gewichtungsfaktor 1 zugeordnet. Gemessene Signalfeldstärken, die mit dem Gewichtungsfaktor 0 gewichtet werden, fallen dabei bei der Berechnung der unbekannten Position heraus und werden nicht berücksichtigt.

Gemäß einer bevorzugten Weiterbildung wird durch die Wichtung der Signalfeldstärken und/oder der Laufzeiten eine Untermenge von Sende-Empfangs-Einheiten der Anzahl von Sende-Empfangs-Einheiten ermittelt. Die unbekannte Position wird dabei ausschließlich anhand der Signalfeldstärken und/oder der Laufzeiten der Sende-Empfangs-Einheiten dieser Untermenge berechnet. Die Anzahl der Sende-Empfangs-Einheiten in dieser Untermenge kann in einer Ausführungsform beispielsweise fest vorgegeben sein. Alternativ wird die Anzahl der Sende-Empfangs-Einheiten in dieser Untermenge durch einen Vergleich der Signalqualität mit einem Referenzwert ermittelt.

In einer anderen Weiterbildungsvariante, die mit den vorhergehenden Weiterbildungen und Ausgestaltungen selbstverständlich auch kombiniert werden kann, wird durch eine Auswertung der gemessenen Signalfeldstärken und/oder der Laufzeiten eine Teilmenge von Sende-Empfangs-Einheiten der Anzahl von Sende-Empfangs-Einheiten ermittelt. Die unbekannte Position wird dabei anhand der gemessenen Signalfeldstärken und/oder anhand der gemessenen Laufzeiten der Sende-Empfangs-Einheiten dieser Teilmenge berechnet. Die Teilmenge ist dabei bevorzugt auf eine maximale Anzahl von gemessenen Signalfeldstärken und/oder gemessenen Laufzeiten begrenzt. Alternativ kann die Anzahl der Sende-Empfangs-Einheiten durch einen Vergleich der Signalfeldstärken und/oder Laufzeiten der empfangenen Signale mit einem Referenzwert ermittelt werden.

Gemäß einer vorteilhaften Weiterbildung wird ein Signal zur Messung der Signalfeldstärke und/oder Laufzeit und Bestimmung der Signalqualität wiederholt übertragen, wenn die Signalqualität einen Schwellwert unterschreitet und/oder die Laufzeit einen Schwellwert überschreitet. Vorzugsweise wird die Wiederholung der Übertragung nach Erreichen eines Abbruchkriteriums, beispielsweise einer bestimmten Anzahl von Wiederholungen, abgebrochen.

Die zuvor beschriebenen Weiterbildungsvarianten sind sowohl einzeln als auch in Kombination besonders vorteilhaft. Dabei können sämtliche Weiterbildungsvarianten untereinander kombiniert werden. Einige mögliche Kombinationen sind in der Beschreibung der Ausführungsbeispiele der Figuren erläutert, diese dort dargestellten Möglichkeiten von Kombinationen der Weiterbildungsvarianten und Ausgestaltungen sind jedoch nicht abschließend.

Im Folgenden wird die Erfindung durch Ausführungsbeispiele anhand zeichnerischer Darstellungen näher erläutert.

Dabei zeigen
- Fig. 1: eine schematische Darstellung eines Funknetzwerksystems, und
- Fig. 2: einen schematischen Verfahrensablauf.

Zukünftige Funksysteme sollen neben der Übertragung von Daten eine Ortsbestimmung von Sendern bzw. Empfängern erlauben. Um eine genaue Ortbestimmung mit einer Genauigkeit von wenigen Metern oder Bruchteilen eines Meters zu ermöglichen wird dieses Systeme mit speziellen Strukturen und/oder Protokollen versehen. Dies können z.B. geeignete Spreizsequenzen sein, die eine genaue Ermittlung der Laufzeit der Funkwellen und damit der Entfernung ermöglichen. Eine diesbezügliche Standardisierung ist der IEEE 802.15.4a.

Eine Orts- bzw. Entfernungsbestimmung ist z.B. anhand von Informationen über eine relative Signalfeldstärke eines empfangenen Funksignals möglich. Beispielsweise lassen sich Informationen über die relative Signalfeldstärke des empfangenen Funksignals in eine relative Entfernung umrechnen. Nimmt man Freiraumausbreitung zwischen Sender und Empfänger an, dann bedeuten 6 dB Unterschied in der Empfangsleistung eine Halbierung bzw. eine Verdopplung der Entfernung. Kennt man die genaue Position einiger Sender/Empfänger, dann lässt sich hieraus die Position weiterer Sender/Empfänger unter der Annahme von Freiraumausbreitung bestimmen. Stimmt diese Annahme nicht, d.h. gibt es signifikante Mehrwegeausbreitung, dann sind die Ergebnisse ungenau bzw. überhaupt nicht verwertbar.

In den folgenden Ausführungsbeispielen sind ein Funknetzwerk und ein Verfahren dargelegt, die außer der empfangenen Signalfeldstärke (RSSI - Received Signal Strength Indicator) noch mindestens eine Qualitätsinformation des Empfangssignals (LQI - Link Quality Indication) in die Auswertung mittels Gewichtung einbezieht. In Abhängigkeit von der Qualitätsinformation kann eine Wichtung der Zuverlässigkeit der Signalfeldstärke für eine Orts- bzw. Entfernungsbestimmung vorgenommen werden. Eine schlechte Qualität des empfangenen Signals deutet dabei auf eine starke Mehrwegeausbreitung hin, so dass die Annahme einer Freiraumausbreitung nicht gilt. Eine hohe Qualität wiederum bestätigt die Annahme einer Freiraumausbreitung und der Wert der Empfangsleistung kann für weitere Berechnungen gut verwendet werden. Interferenzen durch Störer (Mikrowelle, etc.) können die Verwendung der Signalfeldstärke zur Orts- bzw. Entfernungsbestimmung ebenfalls einschränken, was sich aber auch in der Qualitätsinformation widerspiegelt.

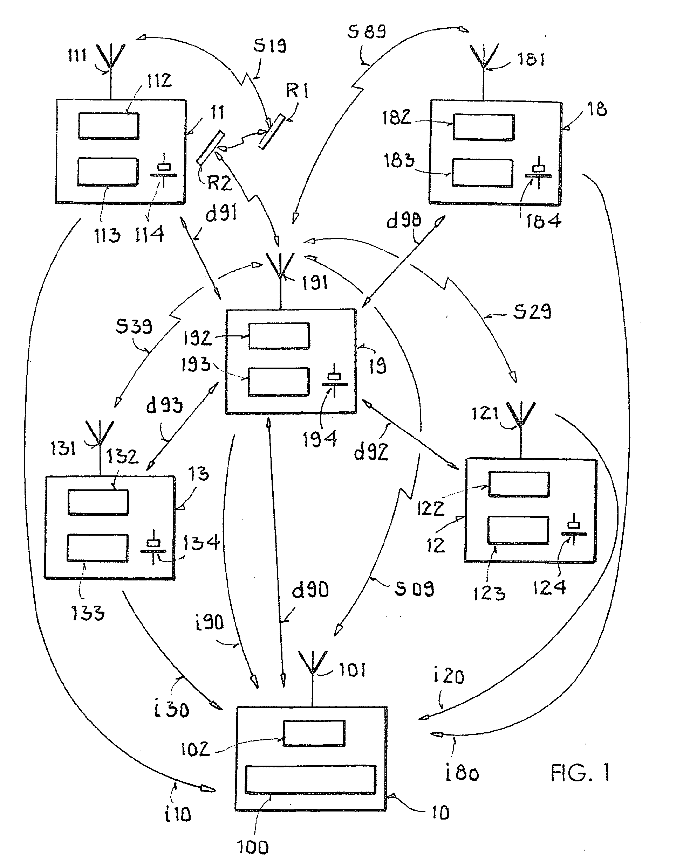

Fig. 1 zeigt ein Funknetzwerksystem mit einer Anzahl von Sende-Empfangs-Einheiten 11, 12, 13, 18, 19 und einer zentralen Sende-Empfangs-Einheit 10. Die zentrale Sende-Empfangs-Einheit weist dabei eine Antenne 101 und einen mit der Antenne 101 verbundenen Transceiver 102 auf. Der Transceiver ist mit einer Recheneinheit 100 verbunden. Die zentrale Sende-Empfangs-Einheit 10 des Ausführungsbeispiels der Fig. 1 ist mit einer (in Fig. 1 nicht dargestellten) externen Energiequelle versorgt.

Die erste Sende-Empfangs-Einheit 11 weist eine Antenne 111 am Transceiver 112 und eine Recheneinheit 113, beispielsweise eines Mikro-Controllers, auf. Der Transceiver 112 und die Recheneinheit 113 sind mit einer Batterie 114 als Energiequelle versorgt. Weiterhin kann die Sende-Empfangs-Einheit 11 weitere Elemente, wie beispielsweise einen Sensor oder einen Aktuator aufweisen.

Ebenso ist auch die Sende-Empfangs-Einheit 12 aufgebaut, die ebenfalls eine Antenne 121, einen Transceiver 122, eine Recheneinheit 123 und eine Batterie 124 aufweist. Ebenfalls ist eine dritte Sende-Empfangs-Einheit 13 vorgesehen, die ebenfalls eine Antenne 131, einen Transceiver 132, eine Recheneinheit 133 und eine Batterie 134 aufweist.

Die vierte Recheneinheit 18 weist ebenfalls eine Antenne 181, einen Transceiver 182, eine Recheneinheit 183 und eine Batterie 184 auf. Die fünfte Sende-Empfangs-Einheit 19 weist ebenfalls eine Antenne 191, einen Transceiver 192, eine Recheneinheit 193 und eine Batterie 194 auf. Im Ausführungsbeispiel der Fig. 1 ist die Position innerhalb des Funknetzwerkes der Sende-Empfangs-Einheiten 11, 12 und 13 bekannt. Ebenfalls bekannt ist die Position der zentralen Empfangseinheit 10. Unbekannt sind die Positionen der Sende-Empfangs-Einheiten 18 und 19.

Im Ausführungsbeispiel der Fig. 1 soll nun die Position der (fünften) Sende-Empfangs-Einheit 19 bestimmt werden. In einer ersten Ausgestaltungsvariante empfängt die Sende-Empfangs-Einheit 19 ein erstes Signal S19 von der ersten Sende-Empfangs-Einheit 11. Die Sende-Empfangs-Einheit 19 misst aus dem empfangenen Signal S19 eine erste Signalfeldstärke und eine erste zu dieser Signalfeldstärke zugeordnete Signalqualität. Weiterhin wird von der zweiten Sende-Empfangs-Einheit 12 ein Signal S29 zur fünften Sende-Empfangs-Einheit 19 mit der unbekannten Position übertragen. Die fünfte Sende-Empfangs-Einheit 19 empfängt das Signal S29 und misst wiederum eine zweite empfangene Signalfeldstärke und eine zugeordnete zweite Signalqualität.

Ein drittes Signal S39 wird von der dritten Sende-Empfangs-Einheit 13 an die fünfte Sende-Empfangs-Einheit 19 übertragen. Wiederum empfängt die fünfte Sende-Empfangs-Einheit das Signal S39 über ihre Antenne 191 und misst durch Messmittel des Transceivers 192 die empfangene dritte Signalfeldstärke und zugeordnete dritte Signalqualität. Weiterhin kann die fünfte Sende-Empfangs-Einheit 19 ein weiteres Signal S09 von der zentralen Sende-Empfangs-Einheit 10 empfangen und auch entsprechend eine weitere Signalfeldstärke und eine weitere Signalqualität ermitteln.

Aus den gemessenen Signalfeldstärken und Signalqualitäten berechnet die fünfte Sende-Empfangs-Einheit 19 selbständig ihre Position im Funknetzwerksystem. Hierzu weist die fünfte Sende-Empfangs-Einheit 19 eine Recheneinheit 193 auf, die die Werte der Signalfeldstärken und Signalqualitäten in einem Algorithmus verarbeitet.

Ebenso ist in der Fig. 1 eine weitere Ausführungsbeispielsvariante dargestellt, wobei zusätzlich das Signal S89 zwischen der vierten Sende-Empfangs-Einheit 18 und der fünften Sende-Empfangs-Einheit 19 übertragen wird. Ebenso ist es möglich, dass die Signale S19, S29, S39, S09 und S89 bidirektional, das heißt jeweils von der fünften Sende-Empfangs-Einheit 19 gesendet, empfangen und übertragen werden. Dabei werden auch in den anderen Sende-Empfangs-Einheiten 10, 11, 12, 13 und 18 die Signalfeldstärken und Signalqualitäten der dort jeweils empfangenen Signale S19, S29, S39, S09 und S89 ermittelt. Die Daten der gemessenen Signalfeldstärken und Signalqualitäten werden als Informationen von der jeweiligen Sende-Empfangs-Einheit 11, 12, 13, 18 und 19 an die zentrale Sende-Empfangs-Einheit 10 als Informationen i10, i20, i30, i80 und i90 übertragen. In diesem Fall berechnet die zentrale Sende-Empfangs-Einheit 10 aus diesen Informationen i10, i20, i30, i80 und i90 die Abstände zwischen allen Sende-Empfangs-Einheiten 10, 11, 12, 13, 18 und 19 als Abstände d91, d92, d93, d90 und d98.

Die Sende-Empfangs-Einheiten 10, 11, 12, 13, 18 und 19 kommunizieren dabei im Hochfrequenz- oder Ultrahochfrequenz-Bereich des elektromagnetischen Spektrums (Radio-Frequenz (RF-Bereich)). Bei einem idealen Kanal, das heißt ein Kanal ohne jegliche Störeinflüsse, sind die Dämpfung und die zeitliche Verzögerung des ausgesendeten Signals durch die Entfernung durch den Kanal bestimmt. Die Dämpfung zwischen Sender und Empfänger ist als das Verhältnis zwischen gesendeter und empfangener Leistung definiert. Geht man von einer idealen Freiraumausbreitung um einen Sender 11, 12, 13, 18 oder 19 aus, lässt sich die Kanaldämpfung abhängig von der Sende-/Empfänger-Entfernung d90, d92, d93 oder d98 beschreiben. In der Praxis wird ein ausgesendetes Signal jedoch durch Hindernisse R1, R2 im Raum über mehrere Einflüsse beeinträchtigt.

Trifft eine Funkwelle S19 auf eine ebene Fläche, so wird sie teilweise, also mit verminderter Leistung an diesen Reflektoren R1, R2 reflektiert. Der Austrittswinkel der Reflektion entspricht dabei dem Einfallswinkel des reflektierten Signals. An rauhen Flächen teilt sich die Leistung der Reflektion auf mehrere Komponenten mit unterschiedlichen Austriftswinkeln auf. An Kanten von Objekten im Raum wird die Ausbreitungsrichtung der Welle durch Beugung verändert. Auch tritt der Effekt der Absorption auf, wobei bei einer Transmission einer Welle durch Materialien sich die Amplitude der ausgesendeten Welle vermindert. Durch Reflektion, Streuung und Beugung überlagern sich im realen Funknetzwerksystem mehrere Komponenten des Sendesignals S19 verschiedener Dämpfung und Verzögerung am Empfänger 19. Dies kann auch als Mehrwege-Ausbreitung bezeichnet werden.

Wenn sich beispielsweise zwei Komponenten eines Signals überlagern, so kann in dem einen Extremfall bei positiver Überlagerung eine maximale Verstärkung, hingegen jedoch bei Überlagerung zweier Komponenten in Gegenphase eine minimale Signalamplitude verursacht werden. In der Realität überlagern sich unendlich viele Reflektionskomponenten am Empfänger, mit zufälliger Dämpfung und Verzögerung. Der Kanal kann dann als komplexer Gauß-Prozess angenommen werden. Besteht das Empfangssignal nur aus reflektierten Komponenten, so ist seine zufällige Amplitude Rayleigh verteilt. Ist zusätzlich ein direktes Signal zwischen Sender und Empfänger vorhanden, das nicht reflektiert wurde, dann unterliegt die Amplitude beim Empfänger einer Rice-Verteilung.

Wie bei einer deterministischen Ausbreitung über zwei Wege ist die Amplitude am Empfänger abhängig von der Frequenz der ausgesendeten Welle, da sich bei Änderung der Frequenz die Konstellation der empfangenen Phasen ändert. Ebenso können massive Änderungen in der Amplitude durch sehr kleine Änderungen der Position des Senders oder Empfängers 10, 11, 12, 13, 18 oder 19 hervorgerufen werden.

Absorptionseffekte sorgen gegenüber der idealen Dämpfung des Kanals für eine zusätzliche Veränderung der Empfangssignalstärke. Die reale Dämpfung nimmt verallgemeinert mit dem so genannten Dämpfungskoeffizienten über die Sender-Empfänger-Entfernung d90, d91, d92, d93, d98 zu.

Für viele Anwendungsfälle in Funknetzwerken ist es notwendig, die Relation zwischen den erfassten Daten und ihrer Herkunft zu kennen. Melden beispielsweise Sende-Empfangs-Einheiten 11, 12, 13, 18 oder 19 eines von einem Funknetzwerk überwachten Feldes in der Landwirtschaft einen Nährstoffmangel im Boden, so ist diese Information dann nahezu wertlos, wenn der Ort dieser Information nicht erfasst wird. Für fest installierte Netzwerke ist es zwar möglich unter erhöhten Einrichtungskosten des Netzwerkes die Position jedes Knotens bei seiner Installation festzustellen und in einer Datenbank abzulegen, für viele andere Szenarien ist dieses Vorgehen jedoch nicht realisierbar. Werden beispielsweise Sensorknoten als Sende-Empfangs-Einheiten 11, 12, 13, 18 oder 19 zur Prävention von Bränden über einem Wald abgeworfen, so ist die Position von nur wenigen Sende-Empfangs-Einheiten 10 beispielsweise mit einem integrierten GPS-Modul bekannt. Hingegen ist die Vielzahl der weiteren Sende-Empfangs-Einheiten (11, 12, 13, 18, oder 19) zunächst nicht bekannt.

Für die Bestimmung der Position eignen sich als physikalische Grundmetriken die Messung der Dämpfung gesendeter Signale durch den Übertragungskanal, die Laufzeit des Signals und/oder die Messung der Phasenlage einer ausgesendeten Welle. Diese Basisgrößen können dann entweder direkt als Eingangsdaten für die Positionsbestimmung verwendet werden oder für weitere Positionierverfahren in abstrakte Größen, wie z. B. Entfernungen, Winkel für geometrische Algorithmen oder Konnektivität für die grobkörnigen Einsätze transformiert werden.

Jeder reale Übertragungskanal dämpft die Leistung der in ihm übertragenen Signale S19, S29, S39, S09 und S89 auf dem Weg vom Sender zum Empfänger 11, 12, 13, 18, 19 und 10. Beim Empfänger kann die Leistung des gedämpften Signals S19, S29, S39, S09 und S89 in Form einer Signalfeldstärke bestimmt werden. Ein RF-Empfänger 11, 12, 13, 18, 19 weist eine Messschaltung 112, 122, 132, 182 bzw. 192 auf, um die Signalfeldstärke zu bestimmen und um in Synergie die Amplitude des Empfangssignals S19, S29, S39, S09 und S89 zur Weiterverarbeitung dynamisch anzupassen (Englisch: Automatic Gain Control, AGC).

Die von einer Referenzstation 11, 12 oder 13 empfangene Signalfeldstärke kann als direktes Merkmal einer Position verwendet werden. Die gemessene Signalfeldstärke wird dann zur Positionierung mit einer Referenzdatenbank verglichen, um ihr eine Position zuzuordnen. Eine weitere Möglichkeit besteht, bei bekannter Dämpfungsfunktion des Kanals und bekannter Ausgangsleistung des Senders 11, 12, 13 in einer Abbildung der empfangenen Signalfeldstärke auf eine Sender-/Empfänger-Distanz d91, d92 oder d93. Um die Signalfeldstärke auf Entfernung zu transformieren, können verschiedene Ausbreitungsmodelle für die empfangene Signalfeldstärke verwendet werden. Zusätzlich könnte der Empfänger ein Antennenfeld aufweisen, dessen einzelne Komponenten eine Richt-Charakteristik aufweisen. Durch die Richt-Charakteristik kann über gemessene Signalfeldstärke-Unterschiede der Einfallswinkel des empfangenen Signals S19, S29 oder S39 rekonstruiert werden. Dies ist jedoch bei einer Vielzahl von Sende-Empfangs-Einheiten 11, 12, 13, 18, 19 und 10 nicht zwingend erforderlich.

Zur Ermittlung der unbekannten Position können unterschiedliche Positionierungsverfahren verwendet werden. Für ein exaktes geometrisches Verfahren werden die Axiome der Elementargeometrie genutzt, um basierend auf Metriken wie Entfernungen oder Winkel zu bekannten Positionen der weiteren Sende-Empfangs-Einheiten 11, 12 oder 13, die unbekannte Position der neu hinzugefügten Sende-Empfangs-Einheit 19 (oder 18) zu bestimmen. Beispiele hierfür sind die feinkörnigen Modelle Lateration, Angulation und RIPS. Approximative Ermittlungen erlauben zugunsten ihrer Einfachheit und niedriger Ressourcenanforderung systematische Fehler bei der Positionierung und daher aber nur eine geringe Genauigkeit und grobe Präzision. Ein weiteres Positionierungsmodell ist die Szenen-Analyse, dabei erfolgt das Finden einer unbekannten Position über die Erkennung eines gemessenen Musters in einer Datenbank.

Im Laterationsverfahren werden Entfernungsmessungen zwischen einem bekannten Knoten einer Sende-Empfangs-Einheit 11, 12, 13 und einem unbekannten Knoten einer Sende-Empfangs-Einheit 19 verwendet, um die Position der unbekannten Sende-Empfangs-Einheit 19 zu bestimmen. Der grundlegende Ansatz ist dabei die atomare Lateration, in der ausschließlich Distanzen d91, d92, d93, d90, d98 zwischen einer Sende-Empfangs-Einheit 19 unbekannter Position und mehreren Sende-Empfangs-Einheiten 11, 12, 13 mit bekannten Positionen verwendet werden. Die atomare Lateration kann durch einen iterativen Prozess erweitert werden. Bei der kollaborativen Lateration werden auch Entfernungen d98 zwischen zwei Sende-Empfangs-Einheiten 18 und 19 benutzt, wobei diese beiden Sende-Empfangs-Einheiten 18 und 19 eine unbekannte Position haben. Diese Entfernung d98 wird genutzt, um in Bezug auf das gesamte Funknetzwerk die Positionen aller Sende-Empfangs-Einheiten 18, 19 mit unbekannter Position zu finden.

Bei dem Prinzip der Lateration gilt es, die unbekannte Position einer Sende-Empfangs-Einheit 19 so zu finden, dass alle bestimmten Entfernungen d91, D92, D93 und D90 zu den Positionen der als Referenz dienenden Empfangseinheiten 10, 11, 12 und 13 an diesem ermittelten Punkt gelten. Der jeweilige Abstand, d90, d91, d92 und d93 zwischen unbekannten Positionen der Sende-Empfangs-Einheit 19 und der Position einer jeweiligen Sende-Empfangs-Einheit 10, 11, 12 oder 13 als Referenz kann durch den euklidischen Abstand ihrer kartesischen Positionsvektoren angegeben werden. Anstatt der exakt gemessenen Entfernungen unterscheiden sich die Distanzen d90, d91, d92 und d93 zusätzlich durch einen Messfehler. Die Wahrscheinlichkeit von Messfehlern ergibt sich abhängig von der Wahrscheinlichkeitsdichte des Messfehlerprozesses in einer Sender-Empfänger-Entfernung.

Im Ausführungsbeispiel der Fig. 1 werden alle Entfernungen d90, d91, d92 und d93 zu den Sende-Empfangs-Einheiten 10, 11, 12 und 13 als Referenzen mit dem gleichen Messverfahren bestimmt. Hieraus ergibt sich ein Gleichungssystem mit einer Lösungsmenge. Die Anzahl der linear unabhängigen Gleichung ist dabei größer als die Dimension der Positionsvektoren, das heißt, existieren in der Ebene mindestens drei nichtkolineare bzw. vier nicht-koplanare Referenzpositionen für die Lokalisation im Raum, so hat das System genau eine analytisch bestimmbare Lösung.

Im Ausführungsbeispiel der Fig. 1 ist der Messfehler jedoch unbekannt und es muss durch ein Regressionsverfahren der Punkt des Suchraums bestimmt werden, welcher den Fehlervektor minimiert. Dies kann als Maximum-Likelihood-Optimierungsproblem formuliert werden.

In einem Funknetzwerk existieren typischerweise mehrere Sende-Empfangs-Einheiten 18, 19 mit unbekannter Position. In einer Erweiterung der atomaren Lateration wird jede Sende-Empfangs-Einheit 18, 19 mit unbekannter Position nach der Bestimmung seiner Position zu einer zusätzlichen Referenz für jede verbliebene Sende-Empfangs-Einheit 18, 19 mit weiterhin unbekannter Position. Die neu bestimmte Position einer neuen Referenz ist dabei im Allgemeinen fehlerbehaftet. Bei der iterativen Lateration wird die Lokalisierung einer jeden Sende-Empfangs-Einheit mit unbekannter Position mit Hilfe neu gewonnener Referenzen wiederholt, so lange, bis eine Abbruchbedingung erfüllt ist. Eine derartige Abbruchbedingung ist beispielsweise eine ausreichend konvergierte Position.

Bei der kollaborativen Lateration werden zusätzlich die Informationen verwendet, die durch die Messung der Signalfeldstärke und Signalqualität eines zwischen zwei Sende-Empfangs-Einheiten 18, 19 mit unbekannter Position übertragenen Signals S89 ermittelt werden. Der kollaborative Ansatz der Lateration ist die Lokalisierung aller Sende-Empfangs-Einheiten 19 etc. mit unbekannter Position im Netzwerk parallel in einem globalen Optimierungsproblem zu erreichen. Im Ausführungsbeispiel der Fig. 1 wird dieses globale Optimierungsproblem in der zentralen Sende-Empfangs-Einheit 10 mittels einer Recheneinheit 100 gelöst, in der ein entsprechender Algorithmus implementiert ist.

Im Ausführungsbeispiel der Fig. 1 kann anstelle der Signalfeldstärke auch eine Laufzeit des Signals zur Entfernungsbestimmung verwendet werden. Stehen beide Informationen der Signalfeldstärke und der Laufzeit zur Verfügung, ist auch eine kombinierte Auswertung der Signalfeldstärke und der Laufzeit zur Bestimmung der Entfernung vorteilhaft. Beispielsweise kann die Laufzeitmessung mittels der Messung der Signalfeldstärke verifiziert werden.

Die Funkwelle des Signals S19 , dass zwischen der ersten Sende-Empfangs-Einheit 11 und der fünften Sende-Empfangs-Einheit 19 übertragen wird, wird an den beiden Reflektoren R1 und R2 - beispielsweise Gebäude oder dergleichen - reflektiert und gedämpft. Aufgrund der oben erläuterten Eigenschaften des Übertragungskanals kann durch die Reflexion an den Reflektoren R1 und R2 die Signalqualität signifikant reduziert werden. Wird durch die Sende-Empfangs-Einheit 19 eine Reduktion der Signalqualität ermittelt wird diese zur Gewichtung der Signalfeldstärke und/oder der Laufzeit verwendet. Im Ausführungsbeispiel der Fig. 1 kann die Entfernung zwischen der ersten Sende-Empfangs-Einheit 11 und der fünften Sende-Empfangs-Einheit 19 durch die Gewichtung bei der Berechnung der Position der fünften Sende-Empfangs-Einheit 19 beispielsweise unberücksichtigt bleiben.

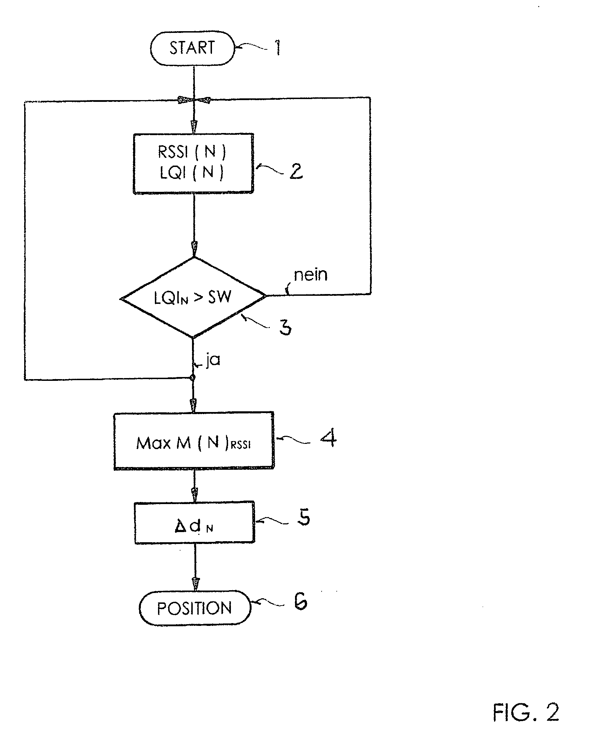

In Fig. 2 ist ein Verfahrensablauf in Form eines schematischen Flussdiagramms beispielhaft dargestellt. Im Verfahrensschritt 1 wird der Ablauf gestartet. Der Start kann beispielsweise durch das Einschalten einer neuen Sende-Empfangs-Einheit 19 mit unbekannter Position initialisiert werden, indem diese Sende-Empfangs-Einheit 19 beginnt, Signale S09, S19, S29, S39 oder S89 zu umliegenden Sende-Empfangs-Einheiten 11, 12, 13, 18 oder 10 zu senden oder zu empfangen. Im Ausführungsbeispiel der Fig. 2 sind dabei eine Anzahl N von Sende-Empfangs-Einheiten in Übertragungsreichweite der neuen Sende-Empfangs-Einheit 19 mit unbekannter Position. Im zweiten Verfahrensschritt wird für jede der N-Sende-Empfangs-Einheiten 11, 12, 13, 18, 10 eine Signalfeldstärke RSSI und eine Signalqualität LQI gemessen bzw. bestimmt.

Im Folgenden dritten Verfahrensschritt 3 wird die einer bestimmten Sende-Empfangs-Einheit zugeordnete N-te Signalqualität LQI(N) mit einem Schwellwert SW für die entsprechende Sende-Empfangs-Einheit 11, 12, 13, 10 oder 18 verglichen. Ist die ermittelte Signalqualität LQI(N) kleiner als der Schwellwert SW, wird die Signalfeldstärke RSSI im Verfahrensschritt 3 mit dem Faktor 0 gewichtet und für eine weitere Sende-Empfangs-Einheit im wiederholten Verfahrensschritt 2 die Signalfeldstärke RSSI und die Signalqualität LQI gemessen und wiederum im folgenden Verfahrensschritt 3 wird die weitere Signalqualität LQI mit dem Schwellwert SW verglichen. Ist die Signalqualität LQI(N) größer als der Schwellwert, so wird die Signalfeldstärke RSSI im Verfahrensschritt 3 mit dem Faktor 1 gewichtet und die Verfahrensschritte 2 und 3 für die noch übrigen Sende-Empfangs-Einheiten 11, 12, 13, 18, 10 wiederholt.

Wenn die Signalqualität LQI(N) kleiner als der Schwellwert SW ist, wird die Signalfeldstärke RSSI zunächst mit dem Faktor 0 gewichtet. In einer weiteren Ausgestaltung ist es möglich, in diesem Fall die Übertragung des Signals von oder zu der zugehörigen Basis-Sende-Empfangs-Einheit zu wiederholen.

Sind die Signale aller in Reichweite befindlichen Sende-Empfangs-Einheiten 11, 12, 13, 18 und 10 gemessen und die Werte der Signalfeldstärken RSSI gewichtet, wird aus den Signalfeldstärken einer Untermenge der Gewichtung 1 eine weitere Teilmenge bestimmt, indem eine Anzahl M von Signalfeldstärkenmessungen in Schritt 4 ermittelt wird. Diese Teilmenge bestimmt im Verfahrensschritt 4 beispielsweise die fünf Sende-Empfangs-Einheiten mit den größten Signalfeldstärken.

Alternativ zu dem in Fig. 2 dargestellten Ausführungsbeispiel kann die Bestimmung der Teilmenge anhand der gemessenen Signalfeldstärken auch vor der Gewichtung der Signalfeldstärken und damit der Bildung der Untermenge anhand dieser Gewichtung erfolgen.

Im Verfahrensschritt 5 werden die Distanzen Δd_{N} also d90, d91, d92, d93 und d98 bestimmt. Die Ermittlung der Position erfolgt im Verfahrensschritt 5 dabei nach dem Laterationsprinzip auf der Basis der Signalfeldstärke. Dabei müssen a priori zur Abbildung der empfangenen Signalfeldstärke auf die Entfernung die Parameter eines Ausbreitungsmodells für die empfangene Signalfeldstärke bestimmt werden. Danach erfolgt die Suche nach Referenzen von Sende-Empfangs-Einheiten 11, 12, 13, 10 mit bekannter Position. Anschließend erfolgt ebenfalls in Verfahrensschritt 5 die Aggregation der Messdaten. Weiterhin werden in Verfahrensschritt 5 die Messdaten optimiert. Hierzu wird für jede Sende-Empfangs-Einheit 11, 12, 13, 10 mit bekannter Position eine gefilterte, skalare Signalfeldstärke als Eingangsgröße erzeugt. Im letzten Teil des Verfahrensschritts 5 wird eine Lösung für die unbekannte Position gesucht. Der geometrisch exakte Ansatz zur Suche der Stelle für einen optimalen Fehlervektor ist die Lösung eines Maximum-Likelihood-Problems. Nachfolgend wird die ermittelte Position in Verfahrensschritt 6 in einem Speicher abgelegt und gespeichert.

Im Ausführungsbeispiel der Fig. 2 kann anstelle der Signalfeldstärke auch eine Laufzeit des Signals zur Entfernungsbestimmung verwendet werden. Stehen beide Informationen der Signalfeldstärke und der Laufzeit zur Verfügung, ist auch eine kombinierte Auswertung der Signalfeldstärke und der Laufzeit zur Bestimmung der Entfernung vorteilhaft. Beispielsweise kann die Signalfeldstärke mittels der Messung der Laufzeit verifiziert werden.

Die Erfindung ist dabei nicht auf die dargestellten Ausgestaltungsvarianten der Fig. 1 und 2 beschränkt. Beispielsweise ist es möglich, eine wesentlich größere Anzahl von Sende-Empfangs-Einheiten in Übertragungsreichweite vorzusehen. Auch ist es möglich, andere Verfahren zur Bestimmung der Position zu verwenden, die als Eingangsgrößen Signalfeldstärken und/oder Laufzeiten und Signalqualitäten verwenden. Die Funktionalität des Funknetzwerksystems des Ausführungsbeispiels der Fig. 1 kann besonders vorteilhaft für ein drahtloses Ad-hoc-Sensornetzwerk verwendet werden.

### Bezugszeichenliste

- 1, 2, 3, 4, 5, 6: Verfahrensblöcke, Verfahrensschritte
- RSSI: Signalfeldstärke
- LQI: Signalqualität
- SW: Schwellwert
- M: Anzahl von Signalfeldstärkenmessungen
- Max: Maximum
- 10: zentrale Sende-Empfangs-Einheit
- 11, 12, 13: Sende-Empfangs-Einheit mit bekannter Position
- 18, 19: Sende-Empfangs-Einheit mit unbekannter Position
- 100: zentrale Recheneinheit
- 101, 111, 121, 131, 181, 191: Antenne
- 102, 112, 122, 132, 182, 192: Transceiver
- 113, 123, 133, 183, 193: Recheneinheit
- 114, 124, 134, 184, 194: Akku, Batterie
- i10, i20, i30, i80, i90: Information
- d90, d91, d92, d93, d98, Δd_{N}: Entfernung, Abstand
- S09, S19, S29, S39: Signal
- R1, R2: Reflexion, Reflexionsfläche

## Patentansprüche

1. Verfahren zur Bestimmung einer unbekannten Position einer Sende-Empfangs-Einheit (18, 19) einer Anzahl von Sende-Empfangs-Einheiten (10, 11, 12, 13, 18, 19) eines Funknetzwerkes,
- bei dem eine Signalfeldstärke (RSSI) und/oder eine Laufzeit eines über eine Antenne (101, 111, 121, 131, 181, 191) empfangenen Signals (S09, S19, S29, S39) gemessen wird,
- bei dem eine Signalqualität (LQI) des über die Antenne (101, 111, 121, 131, 181, 191) empfangenen Signals (S09, S19, S29, S39) bestimmt wird,
- bei dem die gemessene Signalfeldstärke (RSSI) und/oder die Laufzeit anhand der bestimmten Signalqualität (LQI) gewichtet wird,
- bei dem die unbekannte Position der Sende-Empfangs-Einheit (18, 19) der Sende-Empfangs-Einheiten (10, 11, 12, 13, 18, 19) aus mehreren gewichteten Signalfeldstärken und/oder Laufzeiten und bekannten Positionen der Sende-Empfangs-Einheiten (10, 11, 12, 13) berechnet wird.

2. Verfahren nach Anspruch 1, bei dem ein Wertebereich der Signalqualität (LQI) einem Gewichtungsfaktor zugeordnet wird.

3. Verfahren nach Anspruch 2, bei dem zwei Wertebereiche der Signalqualität (LQI) durch eine Schwelle unterschieden werden.

4. Verfahren nach Anspruch 3, bei dem einem ersten Wertebereich der zwei Wertebereiche dem Gewichtungsfaktor Null und ein zweiter Wertebereich der zwei Wertebereiche dem Gewichtungsfaktor Eins zugeordnet wird.

5. Verfahren nach einem der vorhergehenden Ansprüche, bei dem durch die Gewichtung der Signalfeldstärken (LQI) und/oder Laufzeiten eine Untermenge von Sende-Empfangs-Einheiten (10, 11, 12, 13, 18, 19) der Anzahl von Sende-Empfangs-Einheiten (10, 11, 12, 13, 18, 19) ermittelt wird und die unbekannte Position anhand der Signalfeldstärken (RSSI) und/oder Laufzeiten der Sende-Empfangs-Einheiten (10, 11, 12, 13, 18, 19) der Untermenge berechnet wird.

6. Verfahren nach einem der vorhergehenden Ansprüche, bei dem durch eine Auswertung der gemessenen Signalfeldstärken (RSSI) und/oder Laufzeiten eine Teilmenge von Sende-Empfangs-Einheiten (10, 11, 12, 13, 18, 19) der Anzahl von Sende-Empfangs-Einheiten (10, 11, 12, 13, 18, 19) ermittelt wird und die unbekannte Position anhand der Signalfeldstärken (RSSI) und/oder Laufzeiten der Sende-Empfangs-Einheiten (10, 11, 12, 13, 18, 19) der Teilmenge berechnet wird.

7. Verfahren nach einem der vorhergehenden Ansprüchen, bei dem ein Signal zur Messung der Signalfeldstärke (RSSI) und/oder der Laufzeit und Bestimmung der Signalqualität (LQI) wiederholt übertragen wird, wenn die Signalqualität (LQI) einen Schwellwert (SW) unterschreitet.

8. Funknetzwerksystem, mit einer Anzahl von Sende-Empfangs-Einheiten (10, 11, 12, 13, 18, 19),
- bei dem jede Sende-Empfangs-Einheit (10, 11, 12, 13, 18, 19) Messmittel (102, 112, 122, 132, 182, 192) aufweist, die eingerichtet sind zur Messung einer Signalfeldstärke (RSSI) und/oder einer Laufzeit eines über eine Antenne (101, 111, 121, 131, 181, 191) empfangenen Signals (S09, S19, S29, S39) und zur Bestimmung einer Signalqualität (LQI) des über die Antenne (101, 111, 121, 131, 181, 191) empfangenen Signals (S09, S19, S29, S39),
- bei dem das Funknetzwerksystem Berechnungsmittel (100, 113, 123, 133, 183, 193) aufweist, die eingerichtet sind zur Berechnung einer unbekannten Position einer Sende-Empfangs-Einheit (18, 19) der Anzahl von Sende-Empfangs-Einheiten (10, 11, 12, 13, 18, 19) aus gemessenen Signalfeldstärken (RSSI) und/oder Laufzeiten von empfangenen Signalen (S09, S19, S29, S39) und bekannten Positionen der Sende-Empfangs-Einheiten (10, 11, 12, 13), und
- bei dem die Berechnungsmittel (100, 113, 123, 133, 183, 193) eingerichtet sind zur Gewichtung der gemessenen Signalfeldstärken (RSSI) und/oder Laufzeiten anhand der bestimmten Signalqualität (LQI).

9. Verwendung einer aus einem übertragenen Datenrahmen bestimmten Signalqualität (LQI) zur Gewichtung einer gemessenen Signalfeldstärke (RSSI) und/der einer gemessenen Laufzeit eines über eine Antenne (101, 111, 121, 131, 181, 191) empfangenen Signals (S09, S19, S29, S39),
bei der eine unbekannte Position einer Sende-Empfangs-Einheit (18, 19) eines Funknetzwerkes mit einer Anzahl von Sende-Empfangs-Einheiten (10, 11, 12, 13, 18, 19) aus mehreren gewichteten Signalfeldstärken (RSSI) und/oder Laufzeiten mehrerer empfangener Signale (S09, S19, S29, S39) und bekannter Positionen der Sende-Empfangs-Einheiten (10, 11, 12, 13) berechnet wird.
